# EUROPEAN PATENT SPECIFICATION

(11) **EP 3 621 497 B1**
(45) Date of publication and mention of the grant of the patent: **10.03.2021**
(21) Application number: 19735871.6
(22) Date of filing: 07.01.2019
(51) Int. Cl.: A47J 31/18, A47J 31/52

(54) **AN ELECTRICAL DEVICE HAVING HEATING FUNCTION**
ELEKTRISCHE VORRICHTUNG MIT HEIZFUNKTION
DISPOSITIF ÉLECTRIQUE AYANT UNE FONCTION DE CHAUFFAGE

(30) Priority: 08.01.2018 TR 201800211
(43) Date of publication of application: 18.03.2020
(73) Proprietor: Arzum Elektrikli Ev Aletleri San. Ve Tic. A.S., 34050 Istanbul (TR)
(72) Inventor: ATILLA, Ersoy, 34050 Eyüp/Istanbul (TR)
(86) International application number: PCT/TR2019/050012
(87) International publication number: WO 2019/135728

(56) References cited:
- EP-A1- 2 700 338
- EP-A2- 1 106 127

## Description

### Field of the Invention

The present invention relates to an electrical device having heating function especially for heating liquids.

### Background of the Invention

In our daily lives, quickly heating foods and beverages is often needed for actions such as preparing beverages like tea, coffee etc., boiling eggs, and boiling milk. Periodically measuring the temperature of the liquids being heated enables obtaining information about the status of the heating process. The measurement of the temperature is generally realized by temperature sensors called thermistors, the electrical resistance of which change according to the temperature. In the state of the art, these sensors are located in a fixed location on the electrical devices comprising these temperature sensors. This, in turn, prevents the temperature measurements to be made in the same efficiency in different applications. For example, since the temperature of the rising vapors needs to be delicately measured in or to prevent the milk from overflowing while boiling the milk, the placement of the sensor used in a kettle that enables boiling water would not be suitable for being utilized in the application of boiling milk. Accordingly, a structure which can sensitively measure temperature is needed.

The document EP 2 700 338 A1 in the state of the art discloses a Turkish Coffee machine comprising a temperature sensor located over a cooking chamber.

In the devices having heating function in the state of the art, the temperature measurement cannot be realized with sufficient sensitivity because of the fixed structure of the temperature sensor.

None of the documents in the state of the art disclose a solution as in the present application.

### Short Description of the Invention

The objective of the invention is to provide an electrical device having heating function especially for heating liquids.

Another objective of the present invention is to provide an electrical device wherein the temperature measurement could be made sensitively.

### Detailed Description of the Invention

The electrical device in order to fulfill the objects of the present invention is illustrated in the attached figures, where:

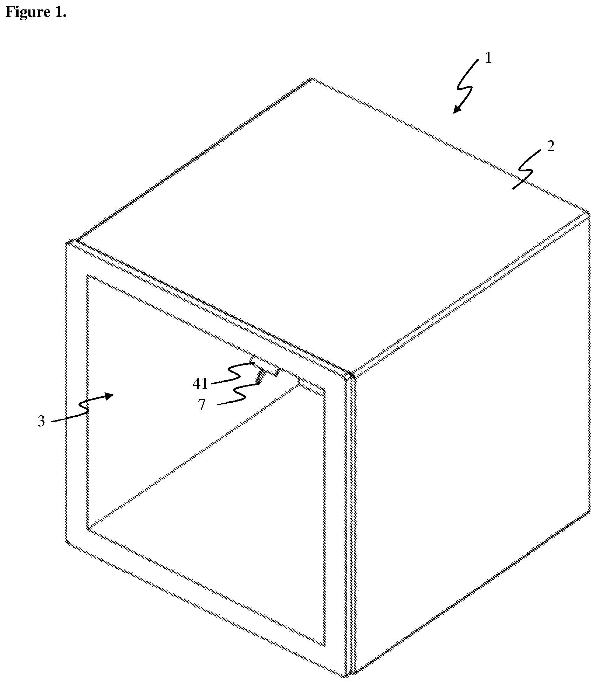

- **Figure 1.**: Is a view of the main body

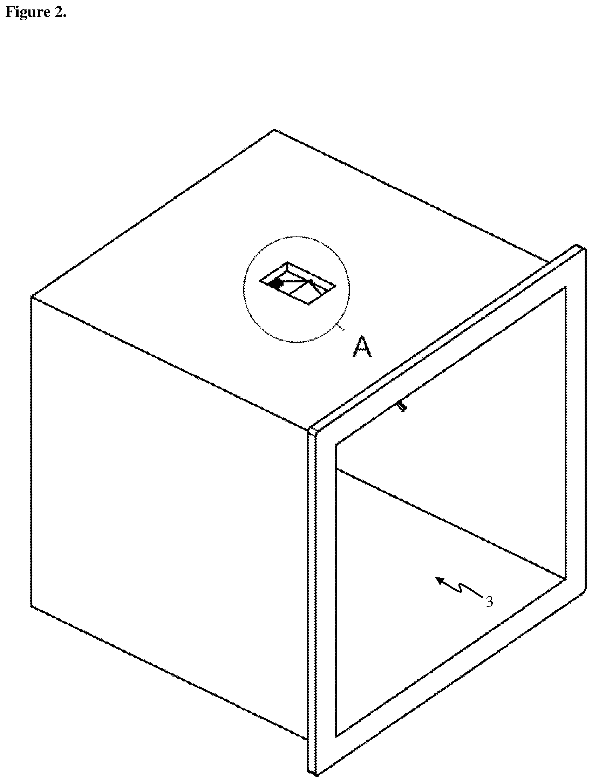

- **Figure 2.**: Is a view of the attachment of the main body and the latch

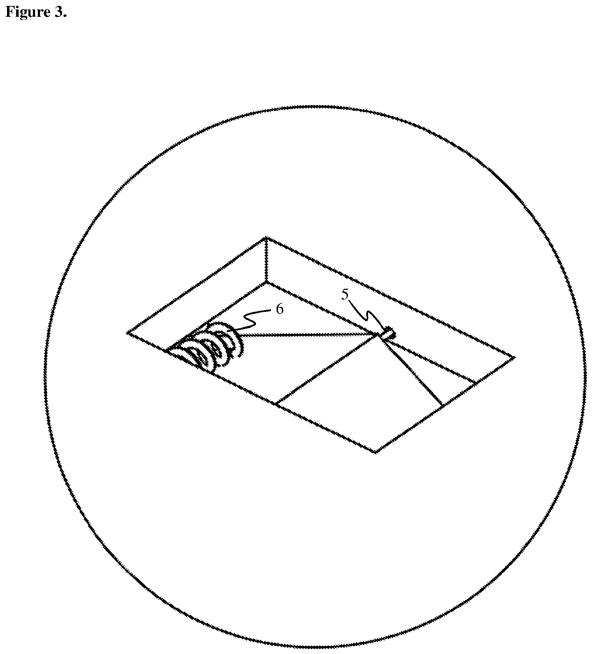

- **Figure 3.**: Is a view of detail A

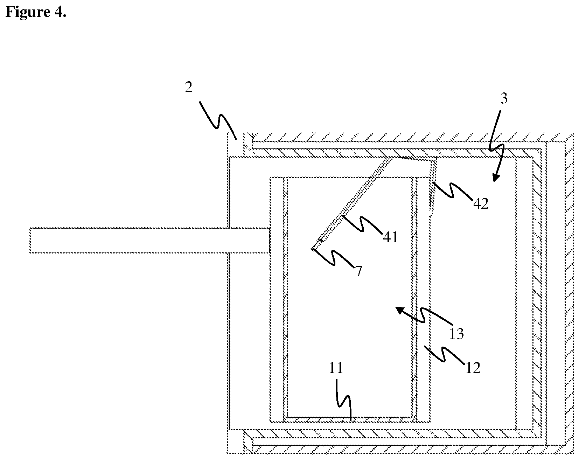

- **Figure 4.**: Sectional view of the housing with the cooking chamber placed

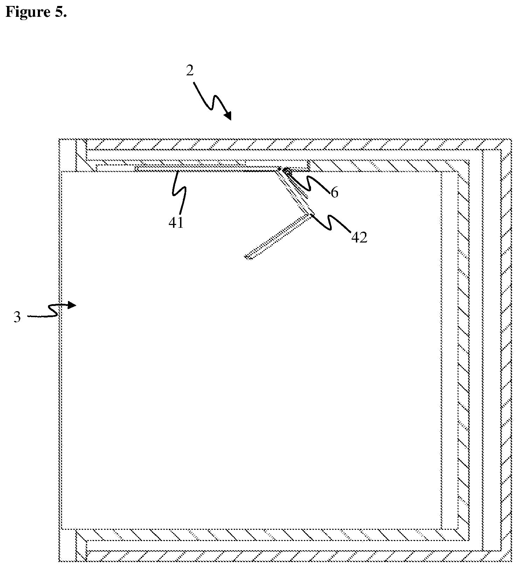

- **Figure 5.**: Sectional view of the housing without the cooking chamber

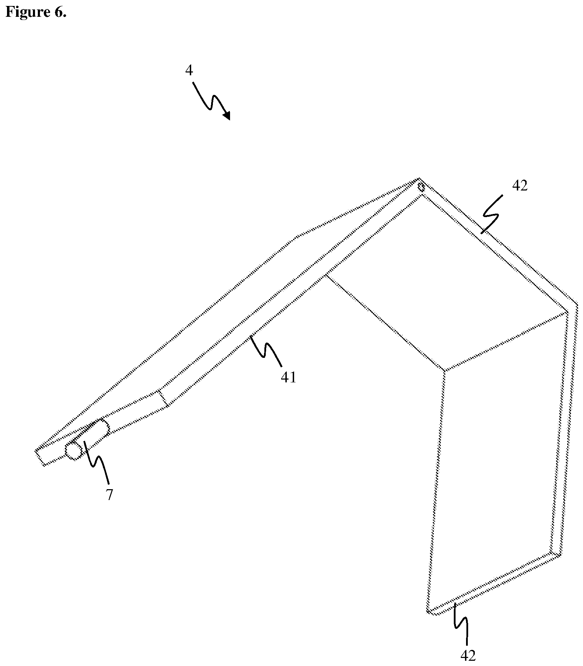

- **Figure 6.**: Is a view of the latch

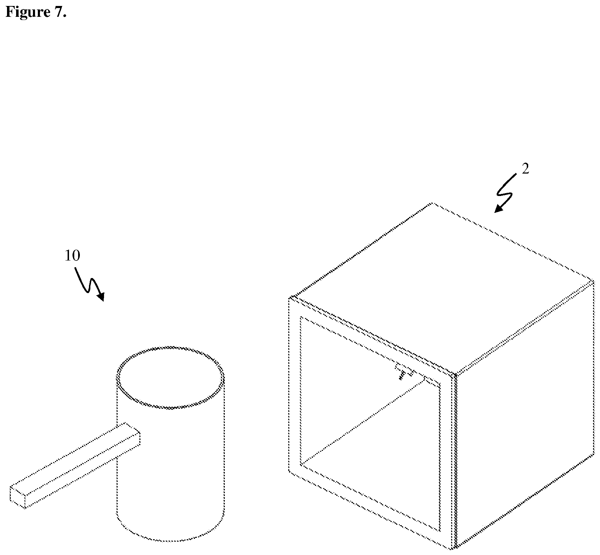

- **Figure 7.**: Is a view of the electrical device and the cooking chamber

Elements shown in the figures are individually numbered, and the correspondence of these numbers are given as follows:
**1.** Electrical device
**2.** Main body
**3.** Housing
**4.** Latch
   **41.** Sensing part
   **42.** Driving part
**5.** Pin
**6.** Spring
**7.** Sensing means
**10.** Cooking chamber
**11.** Base
**12.** Wall
**13.** Inner volume

An electrical device (1) electrical device having heating function especially for heating liquids essentially comprises;
- at least one main body (2),
- at least one housing (3) which is accessible through an opening that is at least partially present at preferably the lateral part of the main body (2), which is suitable for at least one cooking chamber to be placed inside, which has at least one pin hole suitable for a pin to be placed inside,
- at least one latch (4) having at least one sensing part (41) and at least one driving part (42) which are connected to each other with an angle, and at least one bearing which is preferably located at the region where the sensing part (41) and the driving part (42) connect to each other, which is suitable for a pin to be placed inside, and form a rotation axis,
- at least one pin (5) which enters the pin hole that is present on the housing (3), and which forms a rotation axis for the latch (4),
- at least one spring (6) which enables the latch (4) to return to a predefined position once an external force acting on the latch (4) is removed
- at least one sensing means (7) which is present at the sensing part (41) of the latch (4).

The electrical device (1) having heating function especially for heating liquids essentially comprises at least one main body (2). For the ease of expression, we might assume that the main body (2) has a cubic shape, however the main body (2) might have any geometrical shape such cylinder, rectangular prism, and any shape that has an inner volume. At least one part of the lateral part of the main body (2) comprises an opening. When the cube shape is considered, this opening is present on at least one part of at least one lateral surface of the cube. Immediately after the said opening, at least one housing (3) which is suitable for at least one cooking chamber to be placed inside, and which has at least one pin hole suitable for a pin to be placed inside, is present. The access to this housing (3) is provided by this opening. Preferably a recess is present in the part where the pin hole is. The inventive electrical device (1) additionally comprises at least one latch (4) having at least one sensing part (41) and at least one driving part (42) which are connected to each other with an angle, and at least one bearing which is preferably located at the region where the sensing part (41) and the driving part (42) connect to each other, which is suitable for a pin to be placed inside, and forms a rotation axis. The sensing part (41) and the driving part (42) of the latch may comprise multiple parts which are connected to each other with an angle. The latch (4) is positioned such that its bearing is essentially concentric with the pin hole, and then the pin (5) is passed through the pin hole and the bearing. When a force is exerted on the driving part (42) of the latch (4), the latch (4) turns around the rotation axis formed by the said pin (5) such that the sensing part (41) moves away from the ceiling of the housing (3), and the driving part (42) moves closer to the ceiling of the housing (3). Returning of the latch (4) to a predefined position once an external force acting on the latch (4) is removed, is provided by the spring (6). The spring (6) is preferably located between the driving part (42) of the latch (4) and the ceiling of the housing (3). When the latch (4) starts rotating such that its driving part (42) moves closer to the ceiling of the housing (3), the spring (6) gets compressed. When the force causing the latch (4) to rotate is removed, or when the said force is force is smaller than the force exerted by the spring (6), the spring (6) rotates the latch (4) such that its sensing part (41) gets closer to the ceiling of the housing (3), and its driving part (42) moves away from the ceiling of the housing (3). At least one sensing means (7) for sensing the temperature of the heated liquids, or a representation of the said temperature thereof, is present at the sensing part (41) of the latch (4).

The cooking chamber (10) suitable for being used with the inventive electrical device (1), essentially comprises at least one base (11) suitable for being placed on the base of the housing (3), at least one wall (12) which, when the cooking chamber (10) is placed on the base of the housing (3) extends towards the ceiling of the housing (3), and having a space inside suitable for the materials to be heated to be put inside, such that it forms an inner volume (13). The total height of the base (11) and the wall (12) of the cooking chamber (10) suitable for being used with the inventive electrical device (1), is larger than the distance from the base of the housing (3) up the driving part (42) of the latch (4), regardless a force is exerted on the latch (4) or not. By this way, the wall (12) rotates the latch (4) such that its sensing part (41) at least partially enters to the inner volume (13), by exerting a force to the driving part (42) of the latch (4), when the cooking chamber (10) is being placed into the housing (3).

In the preferred embodiment of the invention, a groove for the cooking chamber (10) to be placed inside is present at the bottom of the housing (3). Accidental dislocation of the cooking chamber (10) from the housing (3) is prevented by this groove. In this application, the total height of the base (11) and the wall (12) of the cooking chamber (10), is larger than the distance from the groove at the base of the housing (3) up the driving part (42) of the latch (4).

In the preferred embodiment of the invention, the driving part (41) of the latch (4) comprises two parts which are connected to each other with an angle.

In an embodiment of the invention, a heating means is present at the base of the housing (3) of the electrical device (1). By this, the user may perform the cooking/brewing operation using a cooking chamber (10) having a suitable height, as explained above. The said cooking chamber (10) might be a coffee pot.

In another embodiment of the invention, the heating means is present at the base (11) of the cooking chamber (10). In this embodiment, in order to provide energy to the heating means, an energy transferring means is present in the housing (3), and there is an energy receiving means present on the cooking chamber (10), which reciprocates the said energy transferring means. The energy transferring means and the energy receiving means might be a connector which needs contact, such as a slip-ring, as well as a wireless means for energy transfer, though not limited by these. The energy transferring means and the energy receiving means also serve as a guide in order for the cooking chamber (10) to be placed at the preferred place inside the housing (3). For example, when slip-rings are used for energy transfer, the said slip-rings need to be interlocked to each other for enabling the energy transfer. Once the slip-rings are interlocked, the cooking chamber (10) does not move with the lateral forces acting on it. In order for the cooking chamber (10) to be moved, firstly, the cooking chamber (10) needs to be lifted from the base of the housing (3). In this application, the electrical device (1) provides the heating function together with the cooking chamber (10).

In an embodiment of the invention, a groove is present on the ceiling of the housing (3), in which the sensing part (41) and the driving part (42) of the latch (4) at least partially enter. According to the momentary position of the latch (4), its sensing part (41) or the driving part (42) can at least partially enter the said groove, and thus the sensing part (41) or the driving part (42) is made essentially parallel to the ceiling of the housing (3).

When the cooking chamber (10) is being placed inside the housing (3), the wall (12) of the cooking chamber (10) pushes the driving part (42) of the latch (4) and thus rotates the latch (4). As the result of the rotating motion of the latch (4), the sensing part (41) and thus the sensing means (7) also rotate such that they enter the inner volume (13) of the cooking chamber (10). During this rotating motion, the driving part (42) of the latch (4) compresses the spring (6). By the virtue of the sensing means (7) entering the inner volume (13) of the cooking chamber (10), the temperature of the vapors arising from the liquids to be cooked during the cooking operation could easily and sensitively be measured. The temperature data regarding the temperature sensed by the sensing means (7) are interpreted by a control unit. Using the said temperature data, and predetermined parameters, the control unit decides at least whether or not to stop the cooking operation, and at which power the cooking operation should be carried on. The control unit might read the temperature data in a predetermined frequency.

In an embodiment of the invention, the sensing means (7) could be a component at least one parameter of which changes with respect to temperature, such as a thermistor or a thermocouple. In this embodiment, the component used for sensing temperature is located at the end of the sensing part (41) of the latch (4).

In another embodiment of the invention, the sensing means (7) could be a component which transfers heat to the component at least one parameter of which changes with respect to temperature, such as a thermistor or a thermocouple, and preferably has a high coefficient of thermal conduction. In this embodiment, the component used for sensing temperature does not need to be located at the end of the sensing part (41) of the latch (4).

In an embodiment of the invention, the sensing means (7) could be a sensor such as, including but not limited to, a moisture sensor, infrared distance (proximity) sensor, ultrasound distance sensor etc. The data provided by these sensors are processed by the control unit, and thus the change in the evaporation rate, or the height of the liquid that is inside the cooking chamber (10) could be sensed. In this embodiment, when the cooking chamber (10) is placed inside the housing (3), the sensing means (7) gets closer to the surface of the liquid that is inside the cooking chamber (10). By this way, the changes in the parameters of the liquid such as its temperature, evaporation rate, height, etc. could be observed more closely. The ability to observe more closely, in turn, reduces the sensors that could be used. For example, a distance sensor which can make measurements between 1 cm and 5 cm can make more sensitive measurements than a sensor which can make measurements between 1cm and 15 cm, and also it is cheaper. The sensors that can be used in the present invention might be analog or digital.

While explaining the present invention, it is explained that a liquid is heated inside the cooking chamber (10). However, the said liquid might be solid-liquid, or solid-solid, homogenous or inhomogeneous mixtures such as emulsions or suspensions, or a combination thereof.

## Claims

1. The electrical device (1) having heating function especially for heating liquids comprising;
- at least one main body (2),
- at least one housing (3) which is accessible through an opening that is at least partially present at preferably the lateral part of the main body (2), which is suitable for at least one cooking chamber to be placed inside, **characterized by**
- the housing which has at least one pin hole suitable for a pin to be placed inside,
- at least one latch (4) having at least one sensing part (41) and at least one driving part (42) which are connected to each other with an angle, and at least one bearing which is preferably located at the region where the sensing part (41) and the driving part (42) connect to each other, which is suitable for a pin to be placed inside, and form a rotation axis, which is suitable to be rotated such that it enters at least partially inside an inner volume of a cooking chamber as a result of a force exerted on it,
- at least one pin (5) which enters the pin hole that is present on the housing (3), and which forms a rotation axis for the latch (4),
- at least one spring (6) which enables the latch (4) to return to a predefined position once an external force acting on the latch (4) is removed
- at least one sensing means (7) which is present at the sensing part (41) of the latch (4).

2. An electrical device (1) as in Claim 1 comprising a latch (4) the driving part (42) of which rotates around the rotation axis formed by the pin (5) such that the sensing part (41) moves away from the ceiling of the housing (3), and the driving part (42) moves closer to the ceiling of the housing (3), when a force is exerted on it.

3. An electrical device (1) as in Claim 2 comprising a spring (6) which rotates the latch (4) such that its sensing part (41) gets closer to the ceiling of the housing (3), and its driving part (42) moves away from the ceiling of the housing (3), when the force acting on the latch (4) is removed.

4. An electrical device (1) as in Claim 1 comprising housing (3) having a groove which is suitable for the sensing part (41) and the driving part (42) of the latch (4) to at least partially enter.

5. An electrical device (1) as in Claim 1 comprising a sensing means (7) at least one parameter of which changes with respect to temperature, such as a thermistor or a thermocouple.

6. An electrical device (1) as in Claim 1 comprising sensing means (7) which enables sensing the change of the parameters of the liquid inside the cooking chamber (7), such as its vaporization or height.

7. An electrical device (1) as in Claim 1 comprising a sensing means (7) which enables transfer of heat to a member at least one parameter of which changes with respect to temperature, such as a thermistor or a thermocouple, and which has a high coefficient of thermal conduction.

## Patentansprüche

1. Elektrisches Gerät (1) mit einer Heizfunktion insbesondere zum Erhitzen von Flüssigkeiten, **umfassend**
- mindestens einen Hauptkörper (2),
- am Hauptkörper mindestens ein Gehäuse (3) zur Aufnahme mindestens eines Kochgeschirrs durch eine Öffnung mindestens in einem Teil vorzugsweise des Seitenabschnitts des Hauptkörpers (2), **dadurch gekennzeichnet, dass**
- vorzugsweise im oberen Abschnitt mindestens ein Gehäuse (3) besteht, das sich zur Aufnahme eines Stifts eignet und mindestens über eine Stiftaussparung verfügt,
- mindestens ein Riegel (4) besteht, der über mindestens ein Erfassungsteil (41) und mindestens ein Antriebsteil (42), die mit einem Winkel miteinander verbunden sind, verfügt, und der sich vorzugsweise an der Anschlussstelle des Erfassungsteils (41) mit dem Antriebsteil (42) befindet, der über mindestens ein Lager verfügt, das sich zur Aufnahme eines Stifts eignet und eine Drehachse bildet, sodass durch Drehen nach Kraftausübung die Aufnahme eines Kochgeschirrs im Innenraum ermöglicht wird,
- mindestens ein Stift (5) besteht, der in die im Gehäuse (3) vorkommende Stiftaussparung eindringt und für den Riegel (4) eine Drehachse bildet,
- mindestens eine bei Nachlassen der auf den Riegel (4) wirkenden externen Kraft den Riegel in eine vorher definierte Position drehende Feder (6) besteht,
- der Riegel (4) an seinem Erfassungsteil (41) über mindestens eine Erfassungseinrichtung (7) verfügt.

2. Elektrisches Gerät (1) nach Anspruch 1, **umfassend** einen Riegel (4), der bei Ausübung einer Kraft auf das Antriebsteil (42) sich um die durch den Stift (5) gebildete Drehachse dreht, sodass das Erfassungsteil (41) sich von der Decke des Gehäuses (3) entfernt und das Antriebsteil (42) sich der Decke des Gehäuses (3) nähert.

3. Elektrisches Gerät (1) nach Anspruch 2, **umfassend** eine Feder (6), die bei Nachlassen der auf sie wirkenden Kraft den Riegel (4) dreht, sodass sich das Erfassungsteil (41) der Decke des Gehäuses (3) nähert und das Antriebsteil (42) sich von der Decke des Gehäuses (3) entfernt.

4. Elektrisches Gerät (1) nach Anspruch 1, **umfassend** mindestens eine Aussparung an der Decke, in welche das Erfassungsteil (41) und das Antriebsteil (42) des Riegels (4) mindestens teilweise eindringen können.

5. Elektrisches Gerät (1) nach Anspruch 1, **umfassend** mindestens eine Erfassungseinrichtung (7) mit einem Element wie ein Thermistor oder ein Thermoelement, das über mindestens einen Parameter verfügt, der sich in Bezug auf die Temperatur ändert.

6. Elektrisches Gerät (1) nach Anspruch 1, **umfassend** eine Erfassungseinrichtung (7) wie einen Feuchtigkeitssensor, Infrarot-Entfernungs-(Näherungs-)Sensor, Überschall-Distanzsensor, die eine Erfassung von Änderungen der Parameter im Kochgeschirr (7) wie Verdampfung der Flüssigkeit oder Höhe ermöglicht.

7. Elektrisches Gerät (1) nach Anspruch 1, **umfassend** eine Erfassungseinrichtung (7) wie ein Element mit einem hohen Wärmeleitfähigkeitskoeffizienten, das eine Wärmeübertragung auf ein Element wie ein Thermistor oder ein Thermoelement gewährleistet, von welchem sich mindestens ein Parameter in Bezug auf die Temperatur ändert.

## Revendications

1. Le dispositif électrique (1) ayant une fonction de chauffage notamment pour chauffer des liquides comprenant;
- au moins un corps principal (2),
- au moins un boîtier (3) accessible par une ouverture présente au moins partiellement au niveau de préférence de la partie latérale du corps principal (2), qui convient pour au moins une chambre de cuisson à placer à l'intérieur, **caractérisé par**
- le boîtier qui a au moins un trou d'épingle adapté pour qu'une épingle soit placée à l'intérieur,
- au moins un verrou (4) ayant au moins une partie de détection (41) et au moins une partie d'entraînement (42) qui sont reliées l'une à l'autre avec un angle, et au moins un palier qui est de préférence situé dans la région où la partie de détection (41) et la partie d'entraînement (42) se connectent l'une à l'autre, qui convient à une goupille à placer à l'intérieur et à former un axe de rotation, qui est apte à être tourné de telle sorte qu'il pénètre au moins partiellement à l'intérieur d'un volume intérieur d'une chambre de cuisson sous l'effet d'une force exercée sur elle,
- au moins une goupille (5) qui pénètre dans le trou d'axe qui est présent sur le boîtier (3), et qui forme un axe de rotation pour le verrou (4),
- au moins un ressort (6) qui permet au verrou (4) de revenir dans une position prédéfinie une fois qu'une force externe agissant sur le verrou (4) est supprimée,
- au moins un moyen de détection (7) qui est présent au niveau de la partie de détection (41) du verrou (4).

2. Le dispositif électrique (1) selon la revendication 1, comprenant un verrou (4) dont la partie d'entraînement (42) tourne autour de l'axe de rotation formé par l'épingle (5) de sorte que la partie de détection (41) s'éloigne du plafond du boîtier (3), et la partie d'entraînement (42) se rapproche du plafond du boîtier (3), lorsqu'une force est exercée sur elle.

3. Le dispositif électrique (1) selon la revendication 2, comprenant un ressort (6) qui fait tourner le verrou (4) de sorte que sa partie de détection (41) se rapproche du plafond du boîtier (3), et sa partie d'entraînement (42) s'éloigne du plafond du boîtier (3), lorsque la force agissant sur le verrou (4) est supprimée.

4. Le dispositif électrique (1) selon la revendication 1, comprenant un boîtier (3) ayant une rainure qui convient pour que la partie de détection (41) et la partie d'entraînement (42) du verrou (4) pénètrent au moins partiellement.

5. Le dispositif électrique (1) selon la revendication 1, comprenant un moyen de détection (7) dont au moins un paramètre change par rapport à la température, tel qu'une thermistance ou un thermocouple.

6. Le dispositif électrique (1) selon la revendication 1, comprenant un moyen de détection (7) qui permet de détecter le changement des paramètres du liquide à l'intérieur de la chambre de cuisson (7), tels que sa vaporisation ou sa hauteur..

7. Dispositif électrique (1) selon la revendication 1, comprenant un moyen de détection (7) qui permet le transfert de chaleur vers un élément dont au moins un paramètre change par rapport à la température, comme une thermistance ou un thermocouple, et qui a un coefficient de conduction thermique élevé.
